# EUROPÄISCHE PATENTSCHRIFT

(11) **EP 2 251 297 B1**
(45) Veröffentlichungstag und Bekanntmachung des Hinweises auf die Patenterteilung: **27.08.2014**
(21) Anmeldenummer: 10004678.8
(22) Anmeldetag: 04.05.2010
(51) Int. Cl.: B66F 9/075, B66F 9/08, B62D 25/10, F16B 5/00, B60L 11/18

(54) **Flurförderzeug mit mindestens zwei Verkleidungsteilen**
Industrial truck unit with at least two cladding sections
Chariot de manutention doté d'au moins deux éléments d'habillage

(30) Priorität: 11.05.2009 DE 102009021275
(43) Veröffentlichungstag der Anmeldung: 17.11.2010
(73) Patentinhaber: Jungheinrich Aktiengesellschaft, 22047 Hamburg (DE)
(72) Erfinder: Hildebrand, Lars, 25474 Ellerbek (DE); Knie, Andreas, 20255 Hamburg (DE)
(74) Vertreter: Hauck Patent- und Rechtsanwälte

(56) Entgegenhaltungen:
- EP-A1- 0 761 984
- EP-A1- 1 923 577
- EP-A2- 1 977 989
- JP-A- 7 215 692
- JP-A- 2001 341 538
- US-A- 5 664 826

## Beschreibung

Die vorliegende Erfindung betrifft ein Flurförderzeug mit mindestens zwei Verkleidungsteilen, die an einem Fahrzeugrahmen oder an einem anderen Teil lösbar befestigt sind.

Flurförderzeuge sind aus technischen sowie aus ästhetischen Gründen mit Verkleidungen versehen. Bei den Verkleidungen werden im Bereich des Flurförderzeugs Komponenten und Bauteile verkleidet, auf die nur sehr selten zugegriffen wird. Hierdurch kann auf einen Öffnungsmechanismus für die Verkleidung verzichtet und die Verkleidung am Fahrzeug lösbar aber fest verbaut werden. Bei elektrischen Fahrzeugen ist dies beispielsweise die Batterieraumverkleidung, die bei diesen Fahrzeugen nicht oder nur äußerst selten geöffnet werden muss.

Aus der EP 1 977 989 ist einen Gabelhubwagen gemäß den Oberbegriff des Anspruchs 1 bekannt.

Der Erfindung liegt die Aufgabe zugrunde, ein Flurförderzeug mit mindestens zwei Verkleidungsteilen bereit zu stellen, bei dem die Verkleidungsteile mit geringem Montageaufwand einfach und zuverlässig an dem Flurförderzeug montiert werden können.

Erfindungsgemäß wird die Aufgabe durch ein Flurförderzeug mit den Merkmalen des Anspruchs 1 gelöst. Vorteilhafte Ausgestaltungen bilden den Gegenstand der Unteransprüche.

Das erfindungsgemäße Flurförderzeug ist mit mindestens zwei Verkleidungsteilen ausgestattet, die an einem Fahrzeugrahmen oder einem anderen Bauteil lösbar befestigt sind. Erfindungsgemäß sind zwei benachbarte Verkleidungsteile entlang ihrer Randseite lösbar miteinander verbunden. Ein erstes Verkleidungsteil weist auf seiner zum zweiten Verkleidungsteil weisenden Randseite mindestens einen Steckvorsprung auf. Das zweite Verkleidungsteil besitzt auf seiner zum ersten Verkleidungsteil weisenden Randseite mindestens eine Aufnahme für den oder die Steckvorsprünge. Über den oder die Steckvorsprünge und die korrespondierenden Aufnahmen für die Steckvorsprünge, können die Verkleidungsteile entlang ihrer Randseite miteinander verbunden werden. Jedes der beiden Verkleidungsteile weist mindestens eine Bohrung auf, die im montierten Zustand der Verkleidungsteile paarweise miteinander fluchten, um eine Befestigungsschraube aufzunehmen. Die miteinander über den Steckvorsprung und die Aufnahme verbundenen Befestigungsteile werden durch eine Befestigungsschraube an dem Fahrzeugrahmen oder einem anderen Bauteil lösbar befestigt. Die Befestigungsschraube wird durch beide miteinander verbundenen Verkleidungsteile gemeinsam durchgeführt, um so die miteinander verbundenen Verkleidungsteile gemeinsam an dem Rahmen zu befestigen. Die erfindungsgemäße Ausgestaltung besitzt eine Reihe von Vorteilen. Einerseits können zwei Verkleidungsteile gemeinsam an dem Fahrzeugrahmen mit einer Befestigungsschraube befestigt werden. Darüber hinaus können zwei Verkleidungsteile durch Lösen ihrer Befestigungsschrauben unabhängig voneinander von dem Flurförderzeug entfernt werden. Nach Lösen der Befestigungsschrauben ist es lediglich erforderlich, dass das erste und zweite Verkleidungsteil auseinandergezogen wird, so dass der Steckvorsprung nicht länger in der Aufnahme sitzt.

Das zweite Verkleidungsteil besitzt mindestens einen Anschlag, der festlegt, wie tief der Steckvorsprung in die Aufnahme eintaucht. Der Anschlag ist seitlich von der Aufnahme ausgebildet, wobei eine Kante des ersten Verkleidungsteils an dem Anschlag anliegt. Durch den Anschlag kann ein definierter Abstand zwischen dem ersten und dem zweiten Verkleidungsteil hergestellt werden.

Auf diese Weise entfällt bei der Montage der Verkleidungsteile ein aufwendiges Einstellen des Abstandes zwischen diesen. Der Anschlag ist an dem zweiten Verkleidungsteil derart angeordnet, dass an der Oberseite der Verkleidungsteile ein Spalt mit definierter Breite zwischen dem ersten und dem zweiten Verkleidungsteil gebildet ist.

In einer weiteren bevorzugten Ausgestaltung besitzen der Vorsprung und die dazugehörige Aufnahme jeweils zwei Berührflächen, die sich in Längsrichtung des Steckvorsprungs erstrecken. Beim Einführen des Steckvorsprungs in die Aufnahme geraten die Berührflächen miteinander in Kontakt. Die Berührflächen sind bevorzugt geneigt zueinander angeordnet, wobei die Berührflächen in Richtung von den Verkleidungsteilen fort aufeinander zu laufen. Auf diese Weise wird die Breite der Aufnahme mit zunehmendem Abstand von den Verkleidungsteilen verkleinert, so dass Steckvorsprung und Aufnahme gemeinsam eine Schwalbenschwanz-Verbindung bilden, die die Verkleidungsteile auch in ihrer Querrichtung und insbesondere in ihrer Höhe aneinander ausrichten.

In einer weiteren bevorzugten Ausgestaltung besitzt das erste Verkleidungsteil eine mit einer Bohrung zusammenfallende Aussparung an der Oberseite, durch die der Kopf der Befestigungsschraube hindurch auf den Steckvorsprung des zweiten Verkleidungsteils aufliegt. Durch die Aussparung an der Oberseite des ersten Verkleidungsteils ist es möglich, den Kopf der Befestigungsschraube versenkt in der Verkleidung anzuordnen.

In einer besonders bevorzugten Ausgestaltung ist als erstes Verkleidungsteil eine Fronthaube vorgesehen und als zweites Verkleidungsteil eine Batteriehaube vorgesehen. Fronthaube und Batteriehaube werden erfindungsgemäß ineinander gesteckt und durch die dabei gebildete Bohrung über die Befestigungsschraube am Fahrzeugrahmen verschraubt.

Ein bevorzugtes Ausführungsbeispiel der Erfindung wird anhand der nachfolgenden Figuren näher erläutert. Es zeigt:
- Fig. 1: einen Elektrohochhubwagen in einer perspektivischen Ansicht von der Antriebsseite,
- Fig. 2: eine Schnittansicht der Batteriehaube und der Fronthaube im Bereich deren Verbindung an dem Fahrzeugrahmen,
- Fig. 3: eine perspektivische Ansicht in geschnittener Form von der Antriebsseite, die die Fronthaube und die Batteriehaube im Ausschnitt zeigt,
- Fig. 4: eine perspektivische Ansicht von Batteriehaube und Fronthaube aus dem Fahrzeuginneren ohne Fahrzeugrahmen und
- Fig. 5: eine perspektivische Detailansicht der Verbindung von Batteriehaube und Fronthaube.

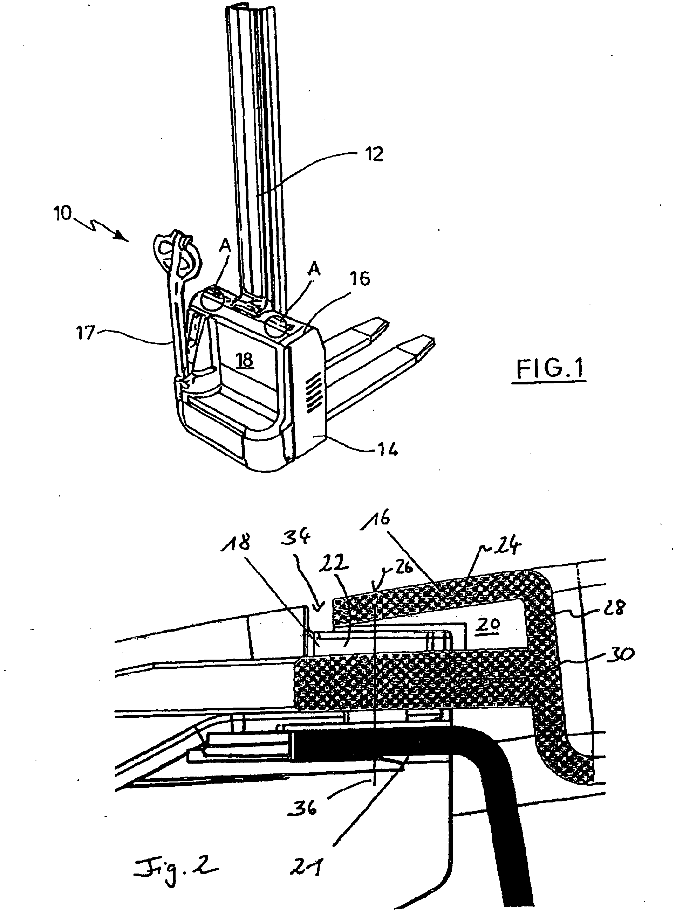

Fig. 1 zeigt einen Elektrohochhubwagen 10 mit einem Hubgerüst 12 und einem Antriebsteil 14. Das Hubgerüst 12 ist mit einem Mittelmast und einem Lastschlitten ausgestattet, dessen Gabelarme in Fig. 1 die Radarme des Fahrzeugrahmens verdecken.

Das Antriebsteil 14 besitzt eine Batteriehaube 16, die das Antriebsteil 14 im Wesentlichen von oben abdeckt. Antriebsseitig, also zur Deichsel 17 weisend, ist der Batterieraum durch eine Fronthaube 18 verkleidet.

Batteriehaube 16 und Fronthaube 18 sind in den Bereichen A mit einem Fahrzeugrahmen (nicht dargestellt) verschraubt.
Fig. 2 zeigt eine Schnittansicht aus einem der Bereiche A, in denen die Batteriehaube 16 und die Fronthaube 18 mit dem Fahrzeugrahmen 21 verschraubt sind. Die Batteriehaube 16 besitzt eine Aufnahme 20 in die ein als Steckzunge 22 ausgebildeter Steckvorsprung hineingreift. Die Aufnahme 20 der Batteriehaube 16 wird an ihrer vom Fahrzeugrahmen 21 fort weisenden Seite von einem geneigten Abschnitt 24 begrenzt. Der geneigte Abschnitt 24 bildet auf seiner Oberseite 26 die Außenhaut der Verkleidung. Der geneigte Abschnitt 24 ist über einen Steg 28 mit der übrigen Batteriehaube 30 verbunden. Durch die Anbindung über den Steg 28 ist der geneigte Abschnitt 24 an der Batteriehaube elastisch angebunden, so dass die Aufnahme 20 sich im Bereich ihrer Mündungsöffnung weiten und verengen kann.
In Fig. 2 ist ferner die Achse 36, entlang der die Verschraubung vorgesehen ist. Die Schraubungsbohrung selbst ist in dem in Fig. 2 dargestellten Schnitt nicht zu erkennen. Zur Befestigung von Fronthaube und Batteriehaube an dem Fahrzeugrahmen 21 wird eine Befestigungsschraube durch die Batteriehaube und die Fronthaube parallel zur Achse 36 durch die Schraubungsbohrung geführt und mit einer entsprechenden Bohrung (nicht dargestellt) am Fahrzeugrahmen verschraubt.

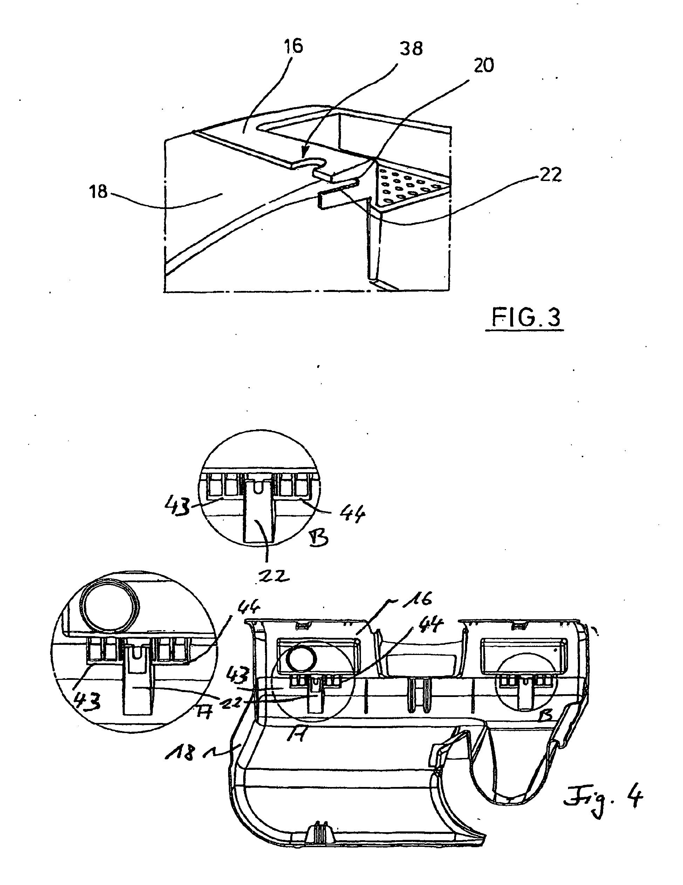

Fig. 3 zeigt eine perspektivische Ansicht der Fronthaube 18 und der Batteriehaube 16 im Schnitt. Deutlich zu erkennen ist, dass die Einsteckzunge 22 in die Aufnahme 20 der Batteriehaube eingreift. Ferner ist eine Aussparung 38 auf der Oberseite der Batteriehaube zu erkennen. Die Aussparung 38 nimmt im montierten Zustand den Kopf der Befestigungsschraube auf, der dann auf der Einsteckzunge 22 aufliegt. Die Befestigungsschraube ist dann durch die untere Begrenzung der Aufnahme 20 geführt.
Fig. 4 zeigt in einer perspektivischen Ansicht von unten, also vom Boden aus gesehen, die Fronthaube 18 in Verbindung mit der Batteriehaube 16. Deutlich zu erkennen ist, dass die Batteriehaube 16 mit der Fronthaube 18 jeweils in den mit A und B gekennzeichneten Bereichen verbunden ist. Zur seitlichen Ausrichtung der Batteriehaube 16 gegenüber der Fronthaube 18 bzw. umgekehrt, besitzt die Batteriehaube 16 zwei Vorsprünge 43 und 44, die die Aufnahme 20 für die Einsteckzunge 22 der Fronthaube 18 bilden. Die durch die Vorsprünge 43 und 44 begrenzte Aufnahme 20 besitzt einen konischen Querschnitt, so dass die Einsteckzunge in der Aufnahme formschlüssig nach Art einer Schwalbenschwanz-Verbindung gehalten ist.

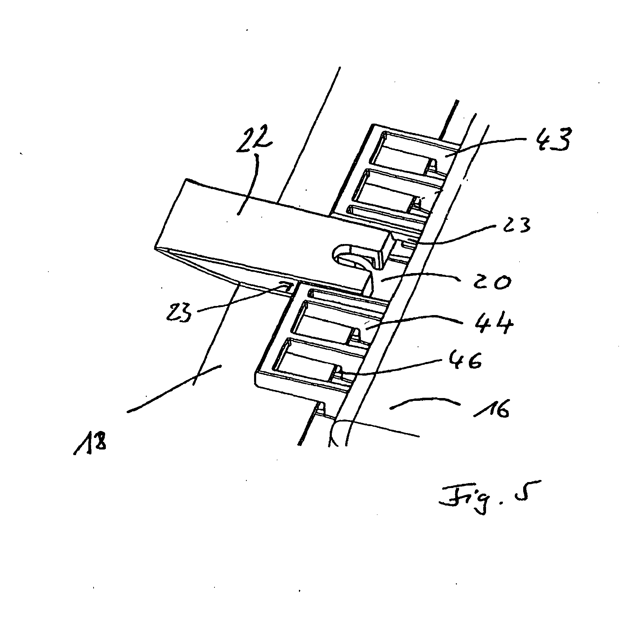

Fig. 5 zeigt in einer perspektivischen Detailansicht wie die Fronthaube 18 mit ihrer Einsteckzungen 22 in die Aufnahme 20 hineinsteht. Die Aufnahme 20 ist seitlich durch die von Rippen gebildeten Vorsprünge 43 und 44 begrenzt. Entlang der Berührflächen zwischen den Vorsprüngen 43 und 44 sowie der Einsteckzunge 22 sind diese geneigt zueinander, wobei die Berührflächen 23 von der Fronthaube fort, einen sich verjüngenden Abstand besitzen, so dass die Breite der Aufnahme 20 sich verkleinert. In Fig. 5 ist ferner zu erkennen, dass durch die Vorsprünge 43 und 44 Anschläge 46 gebildet sind, an die die zur Batteriehaube weisende Kante der Fronthaube 18 stößt. Durch die Anschläge 46 wird sichergestellt, dass der zwischen Batteriehaube und Fronthaube gebildete Spalt 34 einen definierten Abstand besitzt.
Die sich konisch in ihrer Breite verjüngende Aufnahme 20 stellt zudem sicher, dass die Fronthaube die richtige Höhe relativ zu der Batteriehaube besitzt, so dass eine ebene Fläche zwischen Batteriehaube und Fronthaube gebildet ist.

## Patentansprüche

1. Flurförderzeug mit mindestens zwei Verkleidungsteilen (16, 18), die an einem Fahrzeugsrahmen (21) oder einem anderen Bauteil lösbar befestigt sind, **dadurch gekennzeichnet, dass** zwei benachbarte Verkleidungsteile (16, 18) entlang ihrer Randseite lösbar miteinander verbunden sind, wobei ein erstes Verkleidungsteil (18) auf seiner zum zweiten Verkleidungsteil (16) weisenden Randseite mindestens einen Steckvorsprung (22) besitzt und das zweite Verkleidungsteils (16) auf seiner zum ersten Verkleidungsteil (18) weisenden Randseite mindestens eine Aufnahme (20) für den Steckvorsprung (22) besitzt und beide Verkleidungsteile (16, 18) jeweils eine Öffnung aufweisen, die im montierten Zustand der Verkleidungsteile miteinander fluchten und zur Aufnahme einer Befestigungsschraube dienen, dass das zweite Verkleidungsteil (16) mindestens einen Anschlag (46) aufweist, der seitlich von der Aufnahme (20) in dem zweiten Verkleidungsteil (16) ausgebildet ist und festlegt, wie tief der Steckvorsprung (22) in die Aufnahme (20) eintaucht und dass der Anschlag (46) an dem zweiten Verkleidungsteil (16) derart angeordnet ist, dass an oder Oberseite (26) ein Spalt (34) mit einer definierten Breite zwischen dem ersten und dem zweiten Verkleidungsteil gebildet ist.

2. Flurförderzeug nach Anspruch 1, **dadurch gekennzeichnet, dass** der Steckvorsprung (22) und die Aufnahme (20) jeweils zwei Berührflächen (23) besitzen, die in Längsrichtung des Steckvorsprungs verlaufen und die Breite der Aufnahme mit zunehmendem Abstand von den Verkleidungsteilen verkleinern, wobei im montierten Zustand, der Zentriervorsprung in die Aufnahme (20) eintaucht und die Teile relativ zueinander in ihrer Querrichtung ausrichtet.

3. Flurförderzeug nach Anspruch 1 oder 2, **dadurch gekennzeichnet, dass** das erste Verkleidungsteil eine mit der Bohrung zusammenfallende Aussparung an der Oberseite besitzt, durch die der Kopf der Befestigungsschraube hindurch auf dem Steckvorsprung des zweiten Verkleidungsteils aufliegt.

4. Flurförderzeug nach einem der Ansprüche 1 bis 3, **dadurch gekennzeichnet, dass** als erstes Verkleidungsteil eine Fronthaube vorgesehen ist.

5. Flurförderzeug nach einem der Ansprüche 1 bis 4, **dadurch gekennzeichnet, dass** als zweites Verkleidungsteil eine Batteriehaube vorgesehen ist.

## Claims

1. An industrial truck with at least two cladding sections (16, 18) which are releasably fastened to a vehicle frame (21) or another component, **characterised in that** two neighbouring cladding sections (16, 18) are releasably connected together along the edge thereof, a first cladding section (18) on its edge facing the second cladding section (16) having at least one plug-in projection (22) and the second cladding section (16) on its edge facing the first cladding section (18) having at least one receiver (20) for the plug-in projection (22), and both cladding sections (16, 18) in each case comprising an opening which in the mounted state of the cladding sections are aligned with one another and serve to receive a fastening screw, **in that** the second cladding section (16) has at least one stop (46) which is configured to the side of the receiver (20) in the second cladding section (16) and establishes how deeply the plug-in projection (22) penetrates the receiver (20) and **in that** the stop (46) is arranged on the second cladding section (16) such that on the upper face (26) a gap (34) is formed with a defined width between the first and the second cladding sections.

2. The industrial truck according to Claim 1, **characterised in that** the plug-in projection (22) and the receiver (20) in each case have two contact surfaces (23) which extend in the longitudinal direction of the plug-in projection and at an increasing distance from the cladding sections reduce the width of the receiver, in the mounted state the centring projection penetrating the receiver (20) and aligning the sections relative to one another in the transverse direction thereof.

3. The industrial truck according to Claim 1 or 2, **characterised in that** the first cladding section has a recess on the upper face coinciding with the bore, the head of the fastening screw bearing against the plug-in projection of the second cladding section through said recess.

4. The industrial truck according to one of Claims 1 to 3, **characterised in that** a front cover is provided as the first cladding section.

5. The industrial truck according to one of Claims 1 to 4, **characterised in that** a battery cover is provided as the second cladding section.

## Revendications

1. Chariot de manutention doté d'au moins deux éléments d'habillage (16, 18) fixés de façon détachable à un cadre de véhicule ou une autre pièce, **caractérisé en ce que** deux éléments d'habillage (16, 18) voisins sont reliés l'un à l'autre de façon détachable le long de leur bord, dans lequel un premier élément d'habillage (18) possède au moins une saillie d'emboîtement (22) sur son bord tourné vers le deuxième élément d'habillage (16), et le deuxième élément d'habillage (16) possède au moins une admission (20) pour la saillie d'emboîtement (22) sur son bord tourné vers le premier élément d'habillage (18), et les deux éléments d'habillage (16, 18) comportent chacun une ouverture, lesquelles sont en affleurement l'une avec l'autre dans l'état monté des éléments d'habillage et servent à recevoir une vis de fixation, **en ce que** le deuxième élément d'habillage (16) comporte au moins une butée (46) formée sur le côté de l'admission (20) dans le deuxième élément d'habillage (16) et déterminant la profondeur d'introduction de la saillie d'emboîtement (22) dans l'admission (20), et **en ce que** la butée (46) est agencée sur le deuxième élément d'habillage (16) de manière à former une fente (34) d'une largeur définie dans la face supérieure (26) entre le premier et le deuxième élément d'habillage.

2. Chariot de manutention selon la revendication 1, **caractérisé en ce que** la saillie d'emboîtement (22) et l'admission (20) possèdent chacune deux surfaces de contact (23) s'étendant dans le sens longitudinal de la saillie d'emboîtement et réduisant la largeur de l'admission avec un espacement croissant par rapport aux éléments d'habillage, dans lequel, à l'état monté, la saillie de centrage s'introduit dans l'admission (20) et oriente les pièces les unes par rapport aux autres dans leur direction transversale.

3. Chariot de manutention selon la revendication 1 ou 2, **caractérisé en ce que** le premier élément d'habillage possède un évidement dans la face supérieure, lequel coïncide avec le perçage et à travers lequel la tête de la vis de fixation repose sur la saillie d'emboîtement du deuxième élément d'habillage.

4. Chariot de manutention selon l'une des revendications 1 à 3, **caractérisé en ce qu'**un capot avant est prévu comme premier élément d'habillage.

5. Chariot de manutention selon l'une des revendications 1 à 4, **caractérisé en ce qu'**un capot de batterie est prévu comme deuxième élément d'habillage.
